# EUROPEAN PATENT APPLICATION

(11) **EP 2 314 531 A1**
(43) Date of publication of application: **27.04.2011**
(21) Application number: 10187230.7
(22) Date of filing: 12.10.2010
(51) Int. Cl.: B65G 67/20

(54) **Device and method for loading and/or unloading trucks**

(30) Priority: 23.10.2009 NL 2003698; 18.11.2009 NL 2003824
(71) Applicant: Ancra Systems BV, 5281 PL Boxtel (NL)
(72) Inventor: den Teuling, Adrianus Wilhelmus Marius, 5626 GG, Eindhoven (NL)
(74) Representative: Verhees, Godefridus Josephus Maria

(57) **Abstract**

A loading and/or unloading apparatus 1 for mechanically loading a commercial motor vehicle comprises an elongated wheeled carrier 3, as well as transport means for transporting across the carrier freight articles present on the carrier in longitudinal direction of the carrier, and conveying means for conveying the carrier in longitudinal direction across a loading platform.

The carrier 3 has near the front 31 on either longitudinal side 33 a guiding profile 35 which extends from the front of the carrier to the rear. The distance d₁ between the two guiding profiles is smaller at the front than the distance d₂ remote from the front (see Fig. 3) and gradually increases from the front. As a result, the carrier 3 can be driven between the side walls or upright posts of the commercial motor vehicle in a simpler manner and the carrier can be corrected sideways more easily.

## Description

### Field of the invention

The invention relates to a loading and/or unloading apparatus for a commercial motor vehicle provided with an elongated freight storage compartment present over an elongated loading platform, which freight storage compartment is bounded by walls and/or canvas stretching out between upright posts connected to the loading platform, said loading and/or unloading apparatus comprising an elongated wheeled carrier which can be driven with a front side through an open rear side into the freight storage compartment, as well as transport means for transporting across the carrier freight articles present on the carrier in longitudinal direction of the carrier, and conveying means for conveying the carrier in longitudinal direction across the loading platform.

### State of the art

A loading and/or unloading apparatus of this type is known from US2007/0036639A. The carrier is preferably loaded in a warehouse while a commercial motor vehicle is to be reversed in longitudinal direction of the carrier and positioned against a loading/unloading dock. However, in practice the commercial motor vehicle can never be reversed exactly as a continuation of the carrier. When the carrier is driven into the freight storage compartment, the carrier is guided along the side walls or upright posts if the commercial motor vehicle is not reversed exactly as a continuation of or parallel to the carrier. It may happen then that the carrier bumps up against a rear end of either of the walls or against an upright post. In order to avoid this the commercial motor vehicle and the carrier are to be positioned relative to each other in a very accurate manner.

### Summary of the invention

It is an object of the invention to provide a loading and/or unloading apparatus with which the loading of a commercial motor vehicle is simpler than with the heretofore known loading and/or unloading apparatus. For this purpose the loading and/or unloading apparatus according to the invention is **characterized in that** the carrier on either longitudinal side has a guiding profile extending from the front of the carrier, while the distance between the two guiding profiles at the front is smaller than remote from the front and this distance continuously increases from the front onwards. If a commercial motor vehicle is not positioned correctly relative to the carrier, the carrier will bump up against the walls or upright posts with its guiding profiles and thereby be forced to adopt the right direction. This is possible since the carrier possesses some elasticity.

It is observed that from US 2004/0156702 A a fork-lift loader is known to be provided with a broad support surface that is smaller at the front than remote from the front. However, the purpose of this taper is not to guide a part present behind the support surface such as the carrier of the loading and/or unloading apparatus according to the invention.

For having the carrier find its way better, an embodiment of the loading and/or unloading apparatus according to the invention is **characterized in that** the guiding profiles extend from the front of the carrier to distant from this front, which distance amounts to less than half the total length of the carrier. This distance is preferably less than one third of the total length.

The invention also relates to a method of loading a commercial motor vehicle that has a transport compartment that extends over an elongated loading platform which is bounded on either side by walls and/or by a canvas that stretches out between the upright posts connected to the loading platform.

With respect to the method, the invention is **characterized in that** a front part of the carrier is not loaded and once the carrier has been loaded, the carrier is driven into the freight storage compartment up to the front of the freight storage compartment, the carrier finding its way between the walls or the upright posts, after which the freight articles are transported across the carrier to the front of the freight storage compartment and then the carrier is conveyed back from the freight storage compartment from under the freight articles. Since the front part of the carrier is not loaded while the carrier is driven into the freight storage compartment, this part can move more easily sideways when the direction is corrected.

Preferably, at least that part of the carrier covered by the guiding profiles is not loaded and a loading and/or unloading apparatus according to the invention is used which has guiding profiles in which the sideways correction is in that case controlled by the guiding profiles.

The returning of the carrier can be effected by means of the conveying means. To this end the conveying means are to have the option of conveying the carrier not only in forward direction but also in rearward direction. An embodiment of the method according to the invention is **characterized in that** pulling the carrier back is effected by transporting the freight articles relative to the carrier further to the front once the freight articles have been transported against a partition present at the front of the freight storage compartment whereby the carrier pushes itself backwards. For this manner of pulling the carrier back from under the freight artciles, the conveying means need not be provided with the option of conveying the carrier in rearward direction, so that these conveying means can be embodied in a simpler and more cost effective way.

### Brief description of the drawings

The following description relating to the appended drawings, the whole given by way of non-limiting example of the loading and/or unloading apparatus according to the invention, will provide better understanding of how the invention can be realized, in which:
Fig. 1 shows a side view of the loading and/or unloading apparatus with freight articles on it;
Fig. 2 shows a plan view of the loading and/or unloading apparatus without freight articles on it;
Fig. 3 shows a detail of the front of the loading and/or unloading apparatus shown in Fig. 2;
Fig. 4 shows a front view of part of the loading and/or unloading apparatus;
Fig. 5 diagrammatically shows the driving of the carrier into a freight storage compartment;
Fig. 6 shows the conveying of the freight articles across the carrier to the front;
   and
Fig. 7 shows the pushing back of the carrier from under the freight articles.

### Detailed description of the drawings

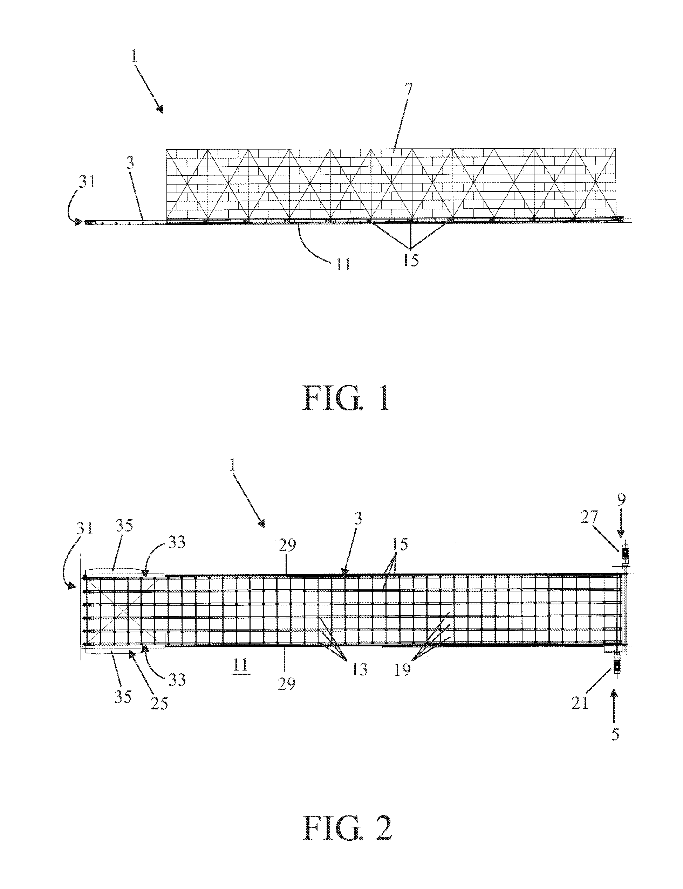

Figs. 1 and 2 show an embodiment of the loading and/or unloading apparatus according to the invention in side view and plan view respectively. The loading and/or unloading apparatus 1 comprises an elongated wheeled carrier 3, as well as transport means 5 for transporting across the carrier freight articles 7 in longitudinal direction of the carrier, and conveying means 9 for conveying the carrier in longitudinal direction across a loading platform 11.

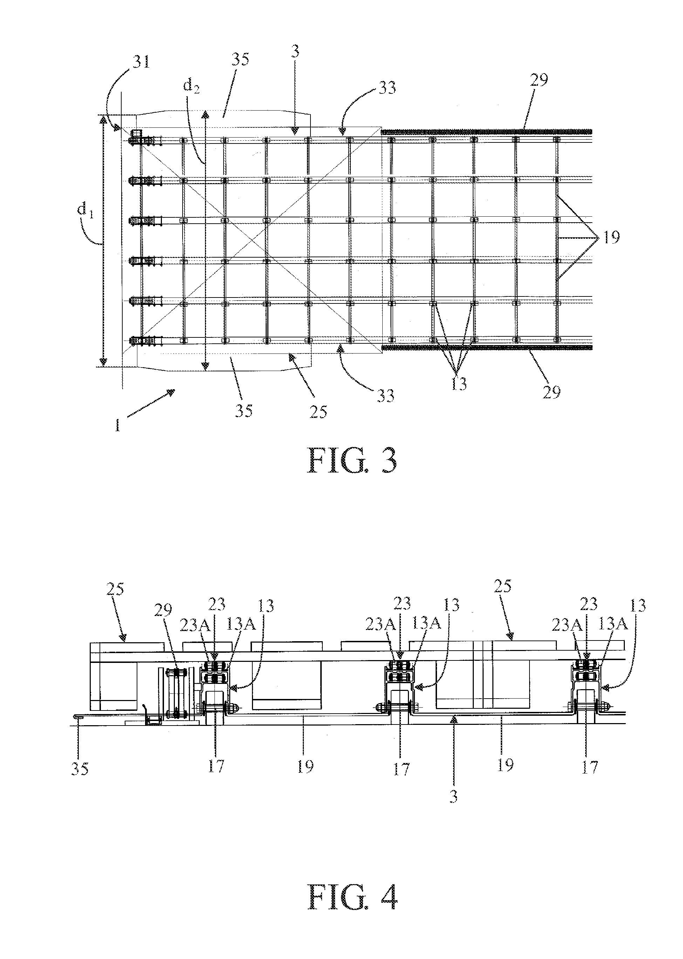

The carrier 3 is formed by elongated profiles 13 which extend in longitudinal direction of the carrier and which accommodate a large number of wheels 15. These wheels are spread over the entire surface of the carrier. The shafts 17 of wheels present side by side (see Figs. 3 and 4) are connected to each other by means of transverse connections 19. The transport means 5 are formed by an electromotor 21 (see Fig. 2) driving endless transport elements in the form of transport chains 23. The transport chains are bypassed at the ends by bypass elements formed by bypass wheels. These transport chains extend with an upper part 23A in guides 13A which form part of the profiles 13 and are present at the top of the profiles.

In Fig. 4 are shown pallets 25 resting on these transport chains 23. The conveying means 9 are also formed by an electromotor 27 (see Fig. 2) which drives further chains 29. These further chains are positioned at the bottom of the carrier (or beside it).

The carrier 3 is provided at the front 31 with a guiding profile 35 on either longitudinal side 33, which guiding profiles extend from the front of the carrier to the rear covering a distance smaller than one fifth of the total length of the carrier. The distance d₁ between the two guiding profiles is smaller at the front than the distance d₂ remote from the front (see Fig. 3) and gradually increases from the front. As a result, the carrier 3 can be driven between the side walls or upright posts of the commercial motor vehicle in a simpler manner and the carrier can be corrected sideways more easily. At the rear of the guiding profiles the distance between the guiding profiles is also smaller than in the middle of the guiding profiles.

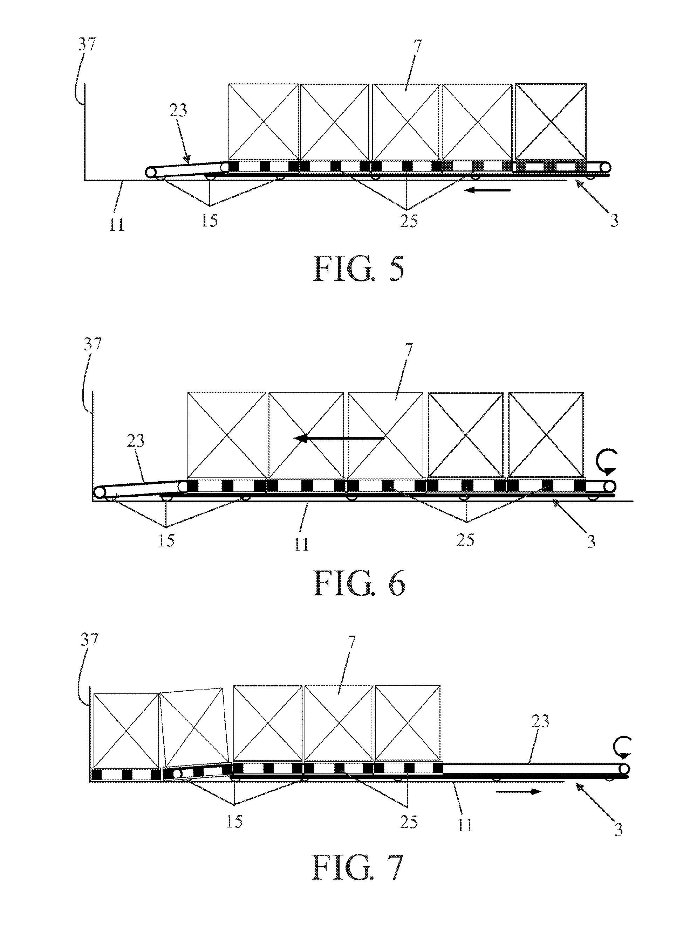

From a spot remote from the end 31 towards the end the guides and hence also the transport chains 23 have a downward inclination to gradually place the freight articles 7 onto the loading platform 11. Figs. 5, 6 and 7 diagrammatically show how the freight articles and the carrier are conveyed when a vehicle is loaded. For clarity the profiles have been omitted, so that the course of the transport chains 23 is well visible. Fig. 5 shows the situation in the vehicle while the carrier 3 is being driven inwards. Once the carrier 3 has been driven up against a partition 37 with its front side 31, which partition bounds the freight storage compartment at the front, the freight articles 7 are conveyed to the front across the carrier 3 as far as against the partition 37 (see Fig. 6). When the freight articles 7 are conveyed further, the carrier 3 is pulled back from under the freight articles, as may be seen in Fig. 7.

Albeit the invention has been described in the foregoing with reference to the drawings, it should be observed that the invention is not by any manner or means restricted to the embodiment shown in the drawings. The invention also extends to all embodiments deviating from the embodiment shown in the drawings within the spirit and scope defined by the claims. In addition to loading a commercial motor vehicle, as described hereinbefore, the loading and/or unloading apparatus may also be used for unloading a commercial motor vehicle loaded with pallets. In that case the transport chains at the front are somewhat lower so that they can be positioned underneath a pallet. The transport chain then gradually inclines to the level indicated hereinabove and can therefore pull a pallet onto the transport chain and thereby push itself from under the pallet. After the pallet has been moved onto the carrier in this fashion, the carrier may be driven out of the commercial motor vehicle.

## Claims

1. A loading and/or unloading apparatus for a commercial motor vehicle provided with an elongated freight storage compartment present over an elongated loading platform, which freight storage compartment is bounded by walls and/or canvas stretching out between upright posts connected to the loading platform, said loading and/or unloading apparatus comprising an elongated wheeled carrier which can be driven with a front side through an open rear side into the freight storage compartment, as well as transport means for transporting across the carrier freight articles present on the carrier in longitudinal direction of the carrier, and conveying means for conveying the carrier in longitudinal direction across the loading platform, **characterized in that** the carrier on either longitudinal side has a guiding profile extending from the front of the carrier, while the distance between the two guiding profiles at the front is smaller than remote from the front and this distance continuously increases from the front onwards.

2. A loading and/or unloading apparatus as claimed in claim 1, **characterized in that** the guiding profiles extend from the front of the carrier to distant from this front, which distance amounts to less than half the total length of the carrier.

3. A method of loading a commercial motor vehicle that has a transport compartment that extends over an elongated loading platform which is bounded on either side by walls and/or by a canvas that stretches out between the upright posts connected to the loading platform with the aid of a loading and/or unloading apparatus as claimed in claim 1 or 2, **characterized in that** a front part of the carrier is not loaded and once the carrier has been loaded, this carrier is driven into the freight storage compartment up to the front of the freight storage compartment, the carrier finding its way between the walls or the upright posts, after which the freight articles are transported across the carrier to the front of the freight storage compartment and then the carrier is conveyed back from the freight storage compartment from under the freight articles.

4. A method as claimed in claim 3, **characterized in that** at least that part of the carrier covered by the guiding profiles is not loaded.

5. A method as claimed in claim 3 or 4, **characterized in that** pulling the carrier back is effected by transporting the freight articles relative to the carrier further to the front once the freight articles have been transported against a partition present at the front of the freight storage compartment, whereby the carrier pushes itself backwards.
